# EUROPÄISCHE PATENTANMELDUNG

(11) **EP 2 474 808 A1**
(43) Veröffentlichungstag der Anmeldung: **11.07.2012**
(21) Anmeldenummer: 11150516.0
(22) Anmeldetag: 10.01.2011
(51) Int. Cl.: G01C 1/04, G01C 7/00, G01C 15/00, G01C 15/06

(54) **Geodätisches Vermessungsgerät mit thermographischer Kamera**

(71) Anmelder: Leica Geosystems AG, 9435 Heerbrugg (CH)
(72) Erfinder: Zimmermann, Jan, CH-9037, Speicherschwendi (CH); Kotzur, Norbert, CH-9445, Rebstein (CH); Möller, Bernd, CH-9450, Lüchingen (CH); Sieber, Stefan, CH-9443, Widnau (CH); Legrand, Vincent, F-95340, Persan (FR)
(74) Vertreter: Kaminski Harmann

(57) **Zusammenfassung**

Ein Verfahren zum mit geodätischer Genauigkeit erfolgenden Positionsbestimmen eines Zielpunkts auf einem Zielobjekt (15) unter Verwendung eines geodätischen Vermessungsgeräts (1) weist eine Anzieleinrichtung, insbesondere Ziel-Fernrohr, auf, wobei die Anzieleinrichtung gegenüber einer Basis des Vermessungsgeräts zur Änderung deren Ausrichtung schwenkbar ist und zumindest eine eine optische Zielachse definierende Objektiveinheit, eine elektronische Distanzmesseinheit, und eine Wärmebildkamera zur Erfassung eines Wärmebildes in Richtung der optischen Zielachse umfasst. Zusätzlich sind eine Winkelmessfunktionalität zur hochpräzisen Erfassung der Ausrichtung der Zielachse, und eine Steuerungseinheit zur Steuerung der Winkelmessfunktionalität und der Wärmebildkamera sowie insbesondere der Ausrichtung der Anzieleinheit, vorgesehen. Erfindungsgemäss werden in einem Wärmebildmessmodus durch Auslösen eines Messvorgangs dabei bestimmte Positionsdaten des angezielten Zielpunktes mit einer Temperaturinformation, die aus dem Wärmebild für den mit der Zielachse anvisierten Zielpunkt ausgelesen wird, verknüpft, insbesondere wobei ein mit der Temperaturinformation korreliertes Abspeichern der Positionsdaten des Zielpunktes erfolgt.

## Beschreibung

Die Erfindung betrifft ein geodätisches Vermessungsgerät zum Messen von Abständen und Winkeln zu Punkten auf einem Objekt nach dem Oberbegriff des Anspruchs 9 und ein Verfahren zum Messen von Abständen und Winkeln zu Punkten auf einem Objekt nach dem Oberbegriff des Anspruchs 1.

Allgemein bekannte Beispiele für geodätische Vermessungsgeräte stellen der Theodolit oder die Totalstation dar. Geodätische Vermessungsgeräte werden zur Bestimmung von Entfernungen und zum gleichzeitigen Erfassen korrespondierender Winkel zu Zielpunkten eingesetzt. Vor allem im Bereich der Landschaftsvermessung oder für Positionierungsaufgaben in der Industrie sind derartige Systeme weit verbreitet im Einsatz. In beiden Einsatzgebieten ist die exakte Bestimmung der Grössen Entfernung und Winkel über teilweise grosse Distanzen gefordert, um z.B. eine nachfolgende Bebauung eines vermessenen Geländes genau planen und umsetzen zu können oder um eine in einen Produktionsprozess eingebundene Maschine zu steuern.

Eine bekannte Erweiterung dieser Vermessungsgeräte ist die Kombination mit einer zumeist in das Gerät integrierten Bildaufnahmeeinheit. Durch z.B. eine Kamera können so zusätzlich zu den bestimmten Grössen Bilder von einer Umgebung erfasst werden, in welcher die Zielpunkte liegen. Diese Kombination eröffnet unter anderem die Möglichkeit eine Vermessung z.B. mittels bildgestützter Zielpunktsuche durchzuführen. Zudem kann durch die Aufnahme eines optischen Bildes eine Zielidentifikation bzw. Zielverfolgung und somit eine weitere Erleichterung und Automatisierung des Vermessungsvorgangs bewirkt werden. Eine automatische Zielverfolgung ist beispielsweise aus der EP 2 141 450 bekannt, wobei eine Anzielrichtung einer Vermessungsstation auf Basis eines verarbeiteten Bildes automatisch auf ein Ziel ausgerichtet wird.

Des Weiteren kann auf einem an dem Vermessungsgerät angebrachten Display ein Bild einer aufgenommenen, zu vermessenden Umgebung angezeigt werden. Mittels einer Eingabeeinheit wird einem Benutzer so ermöglicht auf dem Bild bestimmte Punkte von Interesse auszuwählen und die genauen Positionen der Punkte mit Hilfe der in dem Vermessungsgerät verbauten Distanz- und Winkelmesseinrichtungen zu bestimmen.

Aus der EP 1 314 959 und der WO 2004/036145 sind beispielsweise geodätische Messgeräte mit einer elektronischen Anzeige- und Steuervorrichtung bekannt, die eine bildschirmbasierte Bedienung ermöglichen.

In einer zweidimensionalen Darstellung eines optischen Bildes können demnach Punkte festgelegt werden, zu denen eine Vermessung, d.h. die Bestimmung von Entfernung und/oder Winkel erfolgt. Anhand einer Abbildung, die mit unterschiedlichen Aufnahmemitteln erfasst werden kann, können mittels Verfahren der Bildverarbeitung Ziele identifiziert und verfolgt werden, sodass eine automatische Vermessung auf dieser so geschaffenen Basis grundsätzlich möglich ist. Zusätzlich können mit einer derartigen Ausführung - durch die Anordnung mindestens einer Kamera mit einem erweiterten Erfassungsspektrum -Bereiche und Objekteigenschaften für die Vermessung zugänglich gemacht werden, welche sich ausserhalb der visuellen Zugänglichkeit des menschlichen Auges befinden.

Mittels dieser geodätischen Messgeräte können vorab, z.B. auf einem Display, ausgewählte Punkte angezielt, angefahren und im Anschluss vermessen werden. Dies vereinfacht für den Benutzer eines derartigen Geräts die Bedienbarkeit wesentlich und bietet hinsichtlich der Ergonomie den grossen Vorteil, dass das Gerät nicht zwingend durch ein Okular ausgerichtet werden muss, sondern anhand des Displays bzw. über eine Fernebedienung gesteuert werden kann.

Nachteilig jedoch ist, dass zu einem angemessenen Punkt lediglich Winkel- und Abstandsdaten festgestellt werden können und darüber hinaus keine weiteren Informationen über z.B. das Objekt, auf dem der Punkt liegt, erfasst werden können. Weiterhin findet keine Zuordnung oder Verknüpfung von Positionsinformationen mit weiteren bildbasierten objekt- bzw. zielpunktbezogenen Daten statt.

Zusätzliche Informationen über ein Objekt oder dessen Oberfläche können z.B. auf Basis eines mit einer Kamera aufgenommenen Farbwertes oder auch mit einer Wärmebildkamera erfasst werden. Mittels dieser Informationen können spezifische Objekteigenschaften oder Eigenschaften von zumindest Teilen von Objekten abgeleitet werden. Beispielsweise können Wärmebildkameras zum Erkennen von Unregelmässigkeiten in einer Wärmeverteilung bzw. von Wärmelecken eingesetzt werden und dadurch derartige Stellen z.B. an Bauwerken festgestellt werden. Auch bei der Feuerbekämpfung - zum Auffinden einer Brandquelle - oder zur Zielerkennung bei vorherrschender Dunkelheit kann ein Wärmedetektor eingesetzt werden.

Ein Problem im Zuge eines Einsatzes einer handhaltbaren Wärmebildkamera ergibt sich dann, wenn eine exakte Position einer mit der Kamera erkannte Auffälligkeit oder z.B. die Abmessung dieser Auffälligkeit bestimmt werden soll. Allein aus einem manuell erfassten Wärmebild, welches dann üblicherweise kameraseitig auf einem Display angezeigt werden kann, kann eine derartige Positionierung oder Bestimmung des Ausmasses nicht vorgenommen werden. Eine exakte Positionsbestimmung solcher Auffälligkeiten wäre jedoch unter anderem bei z.B. auszuführenden Baumassnahmen zum Zweck einer Isolationsverbesserung oder von Reparaturarbeiten wünschenswert.

Eine Aufgabe der vorliegenden Erfindung ist es demnach eine Vorrichtung bzw. ein Verfahren bereitzustellen, womit Wärmeenergie-Eigenschaften, insbesondere Temperatureigenschaften, von Objekten mit Positionsinformationen von Punkten auf diesen Objekten lokal korreliert werden können.

Eine spezielle Aufgabe der Erfindung ist es eine Vorrichtung bzw. ein Verfahren bereitzustellen, womit aus Wärmeenergie-Eigenschaften Informationen abgeleitet und diese Informationen mit Positionsinformationen von Punkten lokal korreliert werden können.

Eine weitere spezielle Aufgabe der Erfindung ist es ein System bereitzustellen, womit eine Identifikation von Objekten anhand deren Wärmeenergie-Eigenschaften, insbesondere Temperatureigenschaften, schnell und zuverlässig erfolgen kann. Weiters soll den identifizierten Objekten eine Positionsinformation zugeordnet werden können.

Diese Aufgaben werden durch die Verwirklichung der kennzeichnenden Merkmale der unabhängigen Ansprüche gelöst.

Merkmale, die die Erfindung in alternativer oder vorteilhafter Weise weiterbilden, sind den abhängigen Patentansprüchen zu entnehmen.

Ein erfindungsgemässes Verfahren zum mit geodätischer Genauigkeit erfolgenden Positionsbestimmen eines Zielpunkts auf einem Zielobjekt erfolgt unter Verwendung eines geodätischen Vermessungsgeräts mit einer Anzieleinrichtung, insbesondere Ziel-Fernrohr, wobei die Anzieleinrichtung gegenüber einer Basis des Vermessungsgeräts zur Änderung deren Ausrichtung schwenkbar ist und zumindest eine eine optische Zielachse definierende Objektiveinheit, eine elektronische Distanzmesseinheit, und eine Wärmebildkamera zur Erfassung eines Wärmebildes in Richtung der optischen Zielachse aufweist. Das geodätische Vermessungsgerät weist weiter eine Winkelmessfunktionalität zur hochpräzisen Erfassung der Ausrichtung der Zielachse und eine Steuerungseinheit zur Steuerung der Winkelmessfunktionalität und der Wärmebildkamera sowie insbesondere der Ausrichtung der Anzieleinheit auf. Erfindungsgemäss werden in einem Wärmebildmessmodus durch Auslösen eines Messvorgangs dabei bestimmte Positionsdaten des angezielten Zielpunktes mit einer Temperaturinformation, die aus dem Wärmebild für den mit der Zielachse anvisierten Zielpunkt ausgelesen wird, verknüpft, insbesondere wobei ein mit der Temperaturinformation korreliertes Abspeichern der Positionsdaten des Zielpunktes erfolgt.

Nach einem erfindungsgemässen Verfahren kann ein Zielpunkt auf dem im Wärmebild erfassten Zielobjekt auf Basis eines vordefinierten Temperatur-Mess-Kriteriums, insbesondere automatisch, georeferenzierend vermessen werden, wobei die optische Zielachse des Vermessungsgeräts auf den Zielpunkt ausgerichtet wird. Zur Definition des Temperatur-Mess-Kriteriums kann die Temperaturinformation im Wärmebild, insbesondere mittels Bildverarbeitung, in jeweils einen Temperaturbereich repräsentierende Flächen, wobei die Flächen durch Isotherme zueinander abgegrenzt sind, überführt werden und/oder ein Zentrum eines Temperaturbereichs, insbesondere ein Flächenschwerpunkt, bestimmt werden.

Mittels einer derartigen Bildverarbeitung kann ein aufgenommener, sich farblich kontinuierlich entsprechend eines Temperaturgefälles oder -steigung verändernder Temperaturverlauf in einzelne Zonen unterteilt werden, wobei jede dieser Zonen eine vorher bestimmten Temperaturbereich, z.B. von +10°C bis +15°C, repräsentiert. Die Temperaturbereiche können entsprechend des Temperaturunterschieds von der grössten gemessen Temperatur bis zur kleinsten gemessenen Temperatur angepasst werden. Bei grossen Temperaturunterschieden können beispielsweise grössere Bereiche definiert werden damit die Anzahl der so auf Basis eines Bildes bestimmten Bereiche überschaubar gehalten werden kann, entgegen kann bei einem insgesamt kleinen Temperaturunterschied der Temperaturbereich für eine Zone ebenfalls klein gewählt werden, damit somit Unterscheidungen von Bereichen erfolgen können.

Anhand der so abgeleiteten Zonen kann wiederum mittels Bildverarbeitung eine Grenzelinie zwischen zwei Zonen ermittelt werden. Diese Grenzlinie verkörpert dann gleichzeitig eine Linie, welche entlang ihres Verlaufs eine konstante Temperatur auf einem Objekt repräsentieren kann. Entlang dieser abgeleiteten Isothermen kann eine Vermessung erfolgen und somit die Grenze eines Temperaturbereichs exakt bestimmt werden. Zusätzlich zur Bestimmung von begrenzenden Isothermen können auch Zentren der Zonen abgeleitet werden, die z.B. dem Flächenschwerpunkt entsprechen und damit gleichzeitig den Mittelpunkt dieser Zone darstellen. Mittels dieser Berechnung kann die Bestimmung einer Position einer Quelle eines Wärmelecks durchgeführt werden. So können beispielsweise Undichtigkeiten an wärmeführenden Leitungen lokalisiert und anschliessend Massnahmen zur Abdichtung ergriffen werden oder weitere Wärmequellen ausgemacht werden.

Insbesondere kann mit einem erfindungsgemässen Verfahren entlang eines eine vorbestimmte Temperaturinformation oder einen Temperaturverlauf repräsentierenden Pfades, insbesondere entlang der Isothermen, und/oder fortlaufend zu einem Punkt der vorbestimmten Temperaturinformation, insbesondere zum Zentrum des Temperaturbereichs, gemessen werden.

Dadurch können nicht nur einzelne Punkte angemessen und positionsmässig bestimmt werden, sondern es kann eine genaue Bestimmung und Vermessung von ausgedehnten Objekten durchgeführt werden, deren Eigenschaften einem vorbestimmten (Temperatur-) Kriterium entsprechen. Damit kann beispielsweise ein Bereich oder Punkt vermessen werden, in welchem eine Temperaturauffälligkeit vorliegt und anhand der dabei ermittelten Positionsinformationen eine Bearbeitung dieses Bereichs erfolgen. Alternativ oder zusätzlich kann nicht nur ein räumlicher Verlauf eines Temperaturkriteriums verfolgt werden, sondern auch ein zeitlicher Verlauf. D.h. es können z.B. fortlaufend Messungen zu vordefinierten Punkten erfolgen und zum einen eine allfällige Änderung der räumlichen Position dieser Punkte verfolgt und/oder zum anderen eine Änderung der Temperatur und der zeitliche Verlauf dieser Veränderung an diesen Punkten aufgezeichnet werden. Somit können zumindest diese zwei Beobachtungsfälle relevant sein. So kann zum einen die Temperatur bzw. deren Veränderung oder deren zeitlicher Verlauf auf einem räumlich definierten Punkt erfasst und beobachtet werden, zum andern kann eine definierte Temperatur vorgegeben sein und die Position eines Punkts oder Bereichs mit dieser Temperatur fortlaufend bestimmt werden. Mittels dieser Möglichkeit können Objekte über einen langen Zeitraum beobachtet werden und Veränderungen in deren Struktur bzw. in deren thermischen Eigenschaften erfasst werden. Eine zeitlich ausgedehnte Beobachtungsdauer kann insbesondere für die Überwachung grosser Bauwerke, wie z.B. eines Staudamms, genutzt werden und zur Erfüllung von Sicherheitsauflagen beitragen.

Zusätzlich kann mit einem erfindungsgemässen Verfahren in einer vorbestimmten Punkt-zu-Punkt Auflösung und/oder in einer vorbestimmten zeitlichen Beabstandung von Einzelmessungen automatisch gemessen werden. Hierdurch kann die gewünschte oder erforderliche Genauigkeit von zu erfassenden Abmessungen und Positionen und eine damit verbundene Messdauer variiert werden. So lassen sich sowohl das Zentrum einer Temperaturzone als auch deren Begrenzung durch eine Isotherme entsprechend genau vermessen und auf Basis dieser Messdaten z.B. konstruktive Arbeiten oder Reparaturmassnahmen positionsgenau an einem Objekt durchführen. Z.B. können hierfür zwischen 5 und 50 Punkte auf einer Strecke von 10 cm entlang einer Linie erfasst werden. Alternativ kann eine Auflösung auch in Abhängigkeit einer Winkeländerung definiert sein, so können z.B. 10-100 Punkte während einer Änderung des Erfassungswinkels von 10° gemessen werden. Hinsichtlich der zeitlichen Erfassung können beispielsweise pro Minute 1-60 Messungen erfolgen. Im Rahmen eines erfindungsgemässen Verfahrens kann darüber hinaus ein Referenzstrahl entlang eines Referenzpfades geführt werden, wobei beim Führen des Referenzstrahls mindestens ein Teil des Referenzpfades als Referenzlinie visuell und/oder mittels eines Detektors auf dem Objekt wahrnehmbar ist und der Referenzstrahl auf Basis des Temperatur-Mess-Kriteriums, insbesondere entlang der Isothermen, geführt wird.

Ein derartiges Verfahren, durchgeführt z.B. mit einer Totalstation, kann dem Benutzer und demjenigen, der auf Basis der erzeugten Positionsinformationen weiter Tätigkeiten durchzuführen plant, weitere Vorteile bieten. So können Positionen, die vorher basierend auf einer erfassten Abbildung eines Objekts bestimmt wurden, markiert werden. Für die Markierung der Position kann ein für das menschliche Auge sichtbarer Laserstrahl auf einen der gemessenen Punkte projiziert werden und damit z.B. eine Wärmequelle anzeigen. Durch das Führen des sichtbaren Strahls entlang einer abgeleiteten Isothermen kann weiterhin ein ausgedehnter Flächenbereich gekennzeichnet werden, wobei diese Kennzeichnung insbesondere für die Dauer einer allfälligen handwerkliche Tätigkeit oder zum Abstecken des bestimmten Bereichs aufrecht erhalten werden kann. Bei der Verwendung eines visuell nicht wahrnehmbaren Laserstrahls kann ein Detektor dafür verendet werden, den markierenden Laserstrahl ausfindig zu machen und dessen Verlauf zu bestimmen.

In einem erfindungsgemässen Verfahren können die Temperaturinformationen und ein korrespondierendes

Tageslichtbild unabhängig voneinander und/oder zumindest teilweise überlagert dargestellt werden, insbesondere wobei die Temperatur- und/oder Positionsinformationen zu Punkten zu einem Controller übertragen werden können. Weiter können die Abstände und Winkel zu Punkten referenziert und mit einem lokalen Koordinatensystem verknüpft werden.

Eine Überlagerung oder eine Nebeneinander-Darstellung des Wärmebildes und eines damit korrespondierenden Tageslichtbild kann zu einer eindeutigen Identifikation von zu vermessenden Punkten innerhalb des Sichtbereiches der beiden Bilder beitragen. Kann beispielsweise eine eindeutige Unterscheidung von Punkten alleine auf Basis des Wärmebildes nicht zuverlässig durchgeführt werden so kann ein Tageslichtbild, das den gleichen Sichtbereich erfasst wie das Wärmebild, zur Unterscheidung hinzugezogen und dadurch die Unterscheidung ermöglicht werden. Durch eine Überlager der beiden Bilder kann - abhängig von der jeweiligen Messumgebung -, im Unterschied zu einer Darstellung der Bilder nebeneinander, die Eindeutigkeit hinsichtlich einer Punktunterscheidung weiter gesteigert werden. Wärme- und Tageslichtbild können mittels einer Kamera oder eines Sensors, welcher Aufnahmen in beiden Spektralbereichen realisieren kann, oder mittels zweier unterschiedlicher Sensoren erfasst werden. Der Controller erlaubt dem Benutzer allgemein eine ferngesteuerte Bedienung einer Totalstation. Mittels der Übertragung der von der Kamera erfassten Bildinformation, insbesondere in Echtzeit, kann der Benutzer die spezifischen Temperaturinformationen zur ferngesteuerten Ausrichtung der Totalstation und zur Vermessung von Punkten nutzen.

Weiterhin können mit einem erfindungsgemässen Verfahren die Koordinaten zu einem Zielpunkt auf dem Zielobjekt bestimmt und extrahiert werden und in eine Computereinheit, insbesondere in ein CAD-System, übertragen werden, wobei anhand der Koordinaten Messungen von Abständen und Winkeln in dem erfassten Wärmebild durchführbar sind. Die Koordinaten können dabei Positionen durch Längen- und Breitengradangaben repräsentieren, wobei zusätzliche Höheninformationen zu den Positionen vorhanden sein können. Die im Vermessungsprozess erzeugten Positionsdaten können mit den Wärme- bzw. mit den Tageslichtbildinformationen verknüpft werden und sowohl direkt auf dem Vermessungsgerät weiterverarbeitet werden als auch auf ein weiteres Computersystem übertragen werden. Durch die geschaffene Verknüpfung wird eine Bestimmung von z.B. Abständen, Flächeninhalten, Temperaturen an Objekten oder Temperaturverläufen durchführbar ohne weitere Vermessungsprozesse durchführen zu müssen. Weiterhin kann zu jedem erfassten Bild des Vermessungsgerätes gleichzeitig eine Erfassungsrichtung miterfasst und insbesondere mit dem erfassten Bild verknüpft und gespeichert werden. Unter Heranziehen dieser Richtungsinformation kann ein Punkt auf einem zuvor erfassten Bild so ausgewählt und als "zu vermessen" deklariert werden, dass das Vermessungsgerät automatisch die miterfasste Erfassungsrichtung anfahren und den selektierten Punkt vermessen kann.

Ein erfindungsgemässes geodätisches Vermessungsgerät, insbesondere eine Totalstation oder ein Theodolit, zur Bestimmung von Positionsdaten eines Zielpunktes auf einem Zielobjekt weist eine Anzieleinrichtung, insbesondere ein Ziel-Fernrohr auf, wobei die Anzieleinrichtung gegenüber einer Basis des Vermessungsgeräts zur Änderung deren Ausrichtung schwenkbar ist und zumindest eine eine optische Zielachse definierende Objektiveinheit, eine elektronische Distanzmesseinheit und eine Wärmebildkamera zur Erfassung eines Wärmebildes des Zielobjekts in Richtung der optischen Zielachse aufweist. Darüber hinaus sind eine Winkelmessfunktionalität zur hochpräzisen Erfassung der Ausrichtung der Zielachse und eine Steuerungseinheit zur Steuerung der Winkelmessfunktionalität und der Wärmebildkamera, sowie insbesondere der Ausrichtung der Anzieleinheit, vorgesehen. Erfindungsgemäss werden durch Auslösen eines Messvorgangs die Positionsdaten des angezielten Zielpunktes mit einer Temperaturinformation des Wärmebildes verknüpft, deren Position auf dem Wärmebild mit einer durch die Ausrichtung der optischen Zielachse definierten Position des Zielpunkt korrespondiert, insbesondere wobei durch Mittel zum Speichern ein mit der Temperaturinformation korreliertes Abspeichern der Positionsdaten erfolgt.

Darüber hinaus kann ein erfindungsgemässes geodätisches Vermessungsgerät, insbesondere mit Mitteln zur Bildverarbeitung, derart ausgeführt sein, dass das Vermessungsgerät eine Steuerungsfunktionalität aufweist, wobei im Rahmen der Steuerungsfunktionalität ein oben genanntes erfindungsgemässes Verfahren zum mit geodätischer Genauigkeit erfolgenden Positionsbestimmen eines Zielpunkts auf einem Zielobjekt, insbesondere automatisch, ausgeführt wird. Das Vermessungsgerät kann weiterhin Mittel zur Bildverarbeitung und/oder eine Quelle elektromagnetischer Strahlung aufweisen, insbesondere eine Laserstrahlquelle zur Erzeugung eines Referenzstrahls und Führungsmittel zur Führung des Referenzstrahls entlang eines Referenzpfades, und die Steuerungsfunktionalität kann derart ausgebildet sein, dass bei Ausführung der Steuerungsfunktionalität eines der oben genanntes erfindungsgemässes Verfahren ausgeführt wird.

Mit einem erfindungsgemässen geodätischen Vermessungsgerät kann durch Auslösen des Messvorgangs eine durch die Steuerungseinheit gesteuerte georeferenzierende Messung zu einem Zielpunkt auf dem im Wärmebild erfassten Zielobjekt auf Basis eines vordefinierten Temperatur-Mess-Kriteriums, insbesondere automatisch, erfolgen, wobei eine Ausrichtung der optischen Zielachse des Vermessungsgeräts auf den Zielpunkt erfolgt. Die Messung kann dabei auf Basis eines mittels Bildverarbeitung aufbereiteten Wärmebildes erfolgen. Zur Definition des Temperatur-Mess-Kriteriums ist eine Überführung der Temperaturinformation in jeweils einen Temperaturbereich repräsentierende Flächen, wobei die Flächen durch Isotherme zueinander abgegrenzt sind, und/oder eine Bestimmung eines Zentrums eines Temperaturbereichs, insbesondere eines Flächenschwerpunkts, durch Mittel zur Bildverarbeitung durchführbar.

Erfindungsgemäss kann die Messung entlang eines eine vorbestimmte Temperaturinformation oder einen definierten Temperaturverlauf repräsentierenden Pfades, insbesondere entlang einer Isothermen, und/oder fortlaufend zu einem Punkt der vorbestimmten Temperaturinformation, insbesondere zu einem Zentrum eines Temperaturbereichs, erfolgen.

An einem erfindungsgemässen geodätischen Vermessungsgerät kann weiterhin die Steuerungseinheit derart ausgebildet sein, dass die Messung in einer vorbestimmten Punkt-zu-Punkt Auflösung und/oder in einer vorbestimmten zeitlichen Beabstandung von Einzelmessungen automatisch erfolgt. Weiters kann das erfinderische geodätische Vermessungsgerät eine Quelle elektromagnetischer Strahlung, insbesondere eine Laserstrahlquelle, zur Erzeugung eines Referenzstrahls und Führungsmittel zur Führung des Referenzstrahls entlang eines Referenzpfades aufweisen, wobei bei der Führung des Referenzstrahls mindestens ein Teil des Referenzpfades als Referenzlinie visuell und/oder mittels eines Detektors auf dem Objekt wahrnehmbar ist und die Führung des Referenzstrahls auf Basis des Temperatur-Mess-Kriteriums, insbesondere entlang einer Isothermen, erfolgt. Zudem kann mittels des Referenzstrahls ein temperaturspezifischer Punkt, insbesondere das Zentrum des Temperaturbereichs, markiert werden.

Das erfinderische geodätische Vermessungsgerät kann eine Ausgabeeinheit, insbesondere ein Display, aufweisen, wobei die Temperaturinformation und ein korrespondierendes Tageslichtbild unabhängig voneinander und/oder zumindest teilweise überlagert auf der Ausgabeeinheit darstellbar sind. Insbesondere können mit einem erfindungsgemässen geodätischen Vermessungsgerät erfasste Daten und/oder Information an einen Controller übermittelbar werden, wobei an dem Controller Ausgabemittel zur Darstellung der erfassten Daten und/oder der Information, insbesondere der Temperaturinformation, vorgesehen sind.

Weiterhin ist mit einem erfindungsgemässen geodätischen Vermessungsgerät eine Bestimmung und Extraktion von Koordinaten zu dem Zielpunkt auf dem Zielobjekt durchführbar und die Koordinaten sind in eine Computereinheit, insbesondere in ein CAD-System, übertragbar, wobei anhand der Koordinaten Messungen von Abständen und Winkeln in dem erfassten Wärmebild durchführbar sind.

An einem erfindungsgemässen Vermessungsgerät, wie z.B. einem Theodoliten oder einer Totalstation, ist eine Kamera angeordnet, mit der Bilder einer Umgebung erfasst werden können, wobei die erfassten Bilder jeweils mit einer Messrichtung der Totalstation in Bezug gesetzt werden. Dadurch kann ein zu vermessender Punkt auf einem Bild ausgewählt werden und anschliessend mit Entfernungs- und Winkelmessmitteln dessen exakte Position vermessen werden. Zur Auswahl des Punktes kann ein erfasstes Bild mittels Bildverarbeitung aufbereitet werden. An einem entsprechenden Vermessungsgerät können weiter Ausrichtemittel, z.B. Servo- oder Schrittmotoren, vorgesehen sein, mit denen die Ausrichtung der Messrichtung eingestellt und durch deren Steuerung eine auf einem erfassten Bild basierende Messung automatisch ausgeführt werden kann. Anstelle einer Kamera deren Spektralbereich dem des menschlichen Auges entspricht kann alternativ oder auch zusätzlich eine thermografische Kamera bzw. eine Wärmebildkamera vorgesehen sein, die einen spektralen Erfassungsbereich aufweist, welcher breiter oder im Spektrum verschoben ist und damit dem menschlichen Auge unzugängliche optische Bereiche vermittelt zugänglich macht und z.B. Temperaturinformationen im Infrarotbereich (und damit mittelbar energetische Eigenschaften von Objekten) erfassen kann. Eine derartige Kamera kann so ausgeführt sein, dass diese sowohl ein Tageslichtbild als auch ein thermografisches Bild erfassen und die Bildinformationen jeweils - repräsentiert durch elektronische Signale - sowohl einzeln als auch in einer kombinierten bzw. in einer überlagerten Weise zur Verfügung stellen kann.

Mit einem derartigen Vermessungsgerät kann somit zunächst ein Objekt durch die Kamera so erfasst werden, dass ein dadurch entstehendes Bild dem visuell wahrnehmbaren Bereich des menschlichen Auges entspricht. Zusätzlich zu diesem Bild kann durch eine Aufnahme im Infrarotbereich ein weiteres Bild erstellt werden. Beide Bilder können einem Benutzer auf einem an dem Vermessungsgerät bzw. an der Totalstation vorgesehen Display einzeln, zusammen nebeneinander oder mindestens teilweise überlagert angezeigt werden. Zusätzlich können auch aus einem Wärmebild extrahierte Daten oder Formen mit dem Tageslichtbild überlagert werden. Alternativ oder zusätzlich kann die Darstellung eines oder beider Bilder auch auf einer Fernbedienung bzw. einem Controller mit Display erfolgen, die bzw. der mit dem Vermessungsgerät, insbesondere kabellos über Funk, verbunden ist. Dieses Display kann weiters als berührungssensitives "Touchdisplay" ausgeführt sein und neben eventuell vorhanden anderen Eingabemitteln, wie z.B. einer Tastatur, dem Benutzer damit gleichzeitig als Eingabemittel dienen.

Der Benutzer kann auf Basis eines angezeigten Bilds einen Punkt in einer auf dem Bild erfassten Umgebung auswählen und die Positionsdaten zu diesem Punkt durch Messen ermitteln. Basierend auf einem thermografischen Bild können dem Benutzer weitergehende Möglichkeiten bei einer Objektvermessung zur Verfügung gestellt werden. Auf einem solchen Wärmebild können Temperaturinformationen, zumeist dargestellt durch eine farbliche Abstufung, grafisch sichtbar gemacht werden. Üblicherweise kann darauf ein Temperaturverlauf derart dargestellt werden, dass eine im Spektralbereich erfasste Wellenlänge, die z.B. einer verhältnismässig niedrigen Temperatur eines Objekts entspricht, in einer blau-violette Farbe dargestellt wird und entsprechend Bereiche auf Objekten mit einer hohen Temperatur rötlich dargestellt sind. Zwischen diesen Grenzen des erfassbaren Spektralenbereichs werden Objekttemperaturen gemäss eines vorher definierten Farbverlaufes dargestellt.

Beispielsweise kann so eine Temperaturverteilung eines Objekts, z.B. eines Hauses, farblich abgestuft dargestellt werden, um Informationen darüber zu geben, welche Teile des Objekts stärker erwärmt sind und evtl. mehr Wärme an die Umgebung abgeben als andere kältere Teile. Mit solchen Informationen wird es dem Benutzer beispielsweise ermöglicht ein Wärmeleck zu identifizieren oder die Qualität einer Isolierung zu untersuchen. Nach der visuellen Ortung eines Lecks kann dann im Anschluss die Position des Lecks mittels der Winkel- und Abstandsmesseinheit der Totalstation exakt angefahren und vermessen werden. Insbesondere unter energetischen Gesichtspunkten bietet diese Kombination aus visuellem Erfassungs- und geodätischem Vermessungsprozess von Temperaturzonen eine sehr gute Möglichkeit zur Erkennung und Positionsbestimmung von Temperaturauffälligkeiten und darauf basierender Massnahmenergreifung. Z.B. können so Orte oder Positionen ermittelt werden, an denen eine Isolation eines Gebäudes nicht allgemein geforderten Standards entspricht. Die mangelnde Isolation kann dann punktgenau und effektiv nachgebessert werden.

Darüber hinaus kann der spektrale Erfassungsbereich einer Wärmebildkamera sich hinsichtlich der Reflexionseigenschaft von Strahlung auf Objekten z.B. vom Erfassungsbereich des menschlichen Auges unterscheiden. Dadurch können mittels einer Wärmebildkamera unterschiedliche Objekteigenschaften durch die Erfassung von Reflexionen, insbesondere Reflexionen elektromagnetischer Strahlung mit einer Wellenlänge, welche im Erfassungsbereich der Kamera liegt, erfasst werden, wobei die Temperatur des Objekt über dessen Ausdehnung weitestgehend konstant sein kann. Basierend auf derartigen Reflexionseigenschaften kann wiederum eine Messung zu einem so identifizierten Zielpunkt erfolgen.

Ein erfindungsgemässes Vermessungsgerät kann weiterhin auch in einer für das menschliche Auge dunkel erscheinenden Umgebung effektiv eingesetzt werden. Die von Objekten ausgehende Temperaturstrahlung kann auch bei Dunkelheit erfasst werden, wobei Punkte anhand der so aufgenommenen Bilder selektiert und vermessen werden können. Ein derartiger Einsatz zeigt sich insbesondere bei schwierigen Lichtverhältnissen z.B. unter Tage oder beim Bau von Strassen- oder Eisenbahntunneln als vorteilhaft. Auf ein künstliches starkes Ausleuchten der Messumgebung kann damit teilweise verzichtet werden. Insbesondere dann, wenn als Zielobjekt nicht ein natürliches Gelände dienen muss, sondern Zielmarken zum Einsatz kommen, welche evtl. eine thermische Signatur aufweisen, kann eine erfindungsgemässe Totalstation mit Infrarot- bzw. thermographischer Kamera in einer absolut lichtlosen Umgebung eingesetzt werden.

Insbesondere kann der Detektor eines erfindungsgemässen geodätischens Vermessungsgeräts eine thermisch kodierte Zielmarke erfassen, wobei eine Erfassungsrichtung des Vermessungsgeräts mittels Ausrichtmitteln zum Ausrichten des Vermessungsgeräts fortlaufend auf die Zielmarke ausrichtbar ist. Mittels einer der Erfindung entsprechenden Totalstation kann damit ein Anzielen und Verfolgen eines oder mehrerer thermisch kodierter, z.B. definiert erwärmter, Ziele erfolgen. Durch unterschiedliche Kodierungen, insbesondere durch unterschiedliche Temperaturen der Ziele, kann eine Mehrzahl von Zielmarken erkannt und voneinander unterschieden werden. Derartige Zielmarken können weiters vorher bestimmten Maschinen oder Objekten zugeordnet werden und diese Objekte dann unter Verfolgung der jeweilige Ziele z.B. positionsgenau gesteuert oder deren Positionen, insbesondere auch fortlaufend, bestimmt werden. Das Vermessungsgerät kann dabei fortlaufend z.B. mittels Stell-, Schritt- oder Servomotoren, insbesondere kontinuierlich, so auf die Zielmarke ausgerichtet werden, dass die Erfassungsrichtung des Geräts direkt in Richtung der Zielmarke zeigt.

Ein erfindungsgemässes System weist ein erfindungsgemässes Vermessungsgerät und einer Zielmarke auf, wobei die Zielmarke eine vorbestimmte thermische Kodierung, insbesondere einen Bereich definierter Temperatur und/oder eine definierte geometrische Anordnung temperierter Bereiche, aufweist und wobei eine Position der Zielmarke auf dem von der Wärmebildkamera erfassten Wärmebild mittels einer Identifikation der thermischen Kodierung, insbesondere durch Bildverarbeitung, bestimmbar ist. Durch eine solche Zielerkennungsfunktionalität kann ein z.B. einer Maschine zugeordnetes Ziel bzw. Zielmarke positionsmässig genau bestimmt werden und damit die Position der Maschine abgeleitet werden. Zumindest ein Teil der Zielmarke kann hierfür auf eine definierte Temperatur erhitzt werden.

Zusätzlich kann mittels des erfindungsgemässen Systems im Rahmen einer Zielverfolgung die Position der Zielmarke auf dem Wärmebild der Richtung der optischen Zielachse des Vermessungsgeräts zugeordnet werden und die Steuerungseinheit zur Steuerung der Ausrichtung der Anzieleinheit derart ausgebildet sein, dass ein fortlaufendes Ausrichten der optischen Zielachse auf die Zielmarke erfolgt. Mit dieser Ausrichtung kann ein mit einer Zielmarke versehenes Ziel verfolgt werden. Beispielsweise kann kontinuierlich die Position einer Baumaschine im Gelände festgestellt werden.

Weiters kann die Zielmarke zur Verwendung mit dem erfindungsgemässen System eine Temperiereinheit zur thermischen Kodierung von zumindest einem Teil der Zielmarke aufweisen.

Ein weiterer Aspekt der Erfindung ist ein Verfahren zum Positionsbestimmen eines Zielpunkts mit einer Zielmarke unter Verwendung eines geodätischen Vermessungsgeräts mit einer Wärmebildkamera, wobei die Zielmarke definiert thermisch kodiert ist und die Position der Zielmarke auf dem erfassten Wärmebild bestimmt wird.

Die Position der Zielmarke auf dem Wärmebild kann dabei der Richtung der optischen Zielachse des Vermessungsgeräts zugeordnet und die Zielachse fortlaufend auf die Zielmarke ausgerichtet werden. Zusätzlich kann die Zielmarke eine zumindest teilweise thermische Kodierung aufweisen

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein erfindungsgemässes Vermessungsgerät mit Wärmebildkamera;

- Fig. 2: ein Wärmebild aufgenommen an einer Objektoberfläche mit einem erfindungsgemässen Vermessungsgerät;
- Fig. 3: ein Temperaturprofil mit lokalisierter Wärmequelle;
- Fig. 4a-b: Unterteilungen eines Temperaturverlaufes eines Wärmebildes in unterschiedliche Wärmezonen;
- Fig. 5: eine Tageslicht- und Wärmebildaufnahme eines Gebäudes mit einem erfindungsgemässen Vermessungsgerät;
- Fig. 6: eine Baumaschine mit einer thermisch kodierten Zielmarke und einem erfindungsgemässen Vermessungsgerät;
- Fig. 7: ein Gelände mit thermisch kodierten Zielmarken und einem erfindungsgemässen Vermessungsgerät;
- Fig. 8: zwei Vermessungsstäbe mit jeweils einem Reflektor und thermischen Kodierelementen.

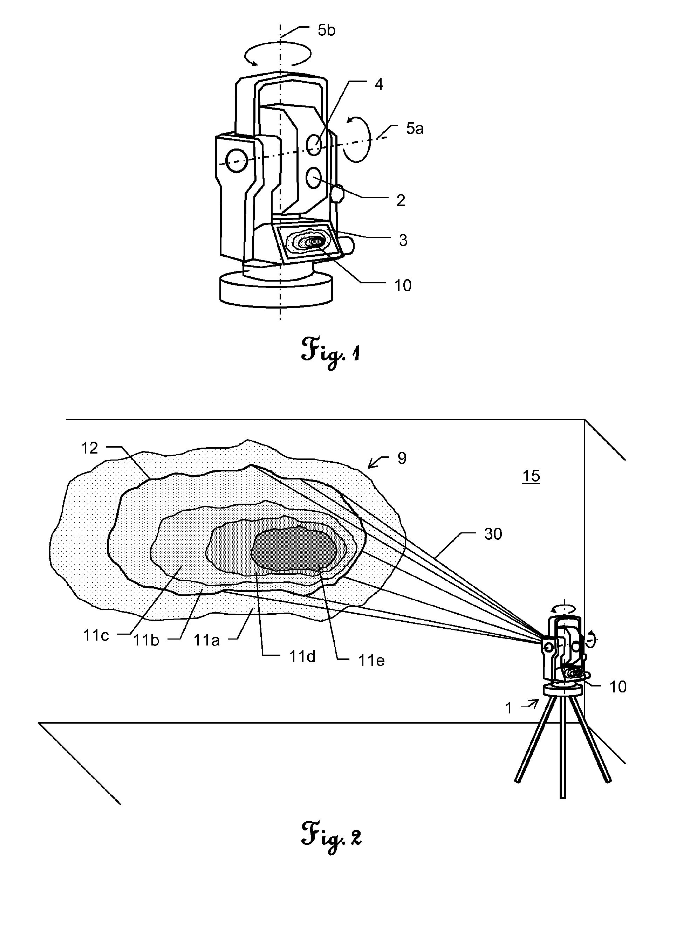

Figur 1 zeigt ein erfindungsgemässes Vermessungsgerät 1 mit einem integrierten Detektor 2, welcher insbesondere als Wärmebildkamera ausgeführt sein kann, wobei der Detektor 2 eine Erfassungsrichtung weitestgehend parallel zu einer Anzielrichtung einer ebenfalls im Vermessungsgerät angeordneten Anzieleinrichtung 4 aufweist. Des Weiteren ist das Vermessungsgerät mit einer Ausgabeeinheit 3, insbesondere mit einem Display, versehen, auf der von der Kamera 2 erfasste Bilder 10 dargestellt werden können. Zudem verfügt das Gerät zur Ausrichtung auf ein Objekt über zwei senkrecht zueinander stehende Drehachsen 5a,5b. Das Vermessungsgerät, z.B. eine Totalstation, kann somit mittels Drehung der Anzieleinrichtung 4 um die beiden Achsen 5a,5b auf ein Objekt ausgerichtet werden und zunächst von diesem Objekt ein Bild 10, insbesondere mit Temperaturinformation, erfassen. Aus dem Bild kann anschliessend ein Temperaturprofil des Objekts abgeleitet und mittels Bildverarbeitung definierte Temperaturzonen bestimmt werden. Im Anschluss können Punkte von Interesse, z.B. Punkte mit Temperaturauffälligkeiten, anhand der Anzieleinrichtung 4 vermessen und deren Position auf dem Objekt exakt bestimmt werden.

In Figur 2 werden ein erfindungsgemässes Vermessungsgerät 1 und ein Objekt 15 bzw. dessen Objektoberfläche, von dem ein Wärmebild 10 erfasst wird, gezeigt. Auf dem Objekt 15 selbst wird zur besseren Veranschaulichung ein Temperaturprofil 9 korrespondierend zum Wärmebild 10 gezeigt. In einem dem menschlichen Auge zugänglichen Spektralbereich würde die Objektoberfläche als eine homogene Fläche ohne Auffälligkeiten erscheinen. Jedoch können durch eine Erweiterung des wahrnehmbaren und anzeigbaren Spektralbereichs weitere Eigenschaften dieser Oberfläche sichtbar gemacht werden. Das Temperaturprofil entspricht einer Darstellung nach einer an einem kontinuierlichen Temperaturverlauf vorgenommenen Bildverarbeitung. Der vormals kontinuierliche (Farb-) Verlauf wird durch vermessungsgerätseitige Mittel zur Bildbearbeitung in die Zonen bzw. Bereiche 11a-e unterteilt, welche jeweils einen vordefinierten Temperaturbereich repräsentieren. Die Temperaturbereiche 11a-e werden wiederum durch jeweils eine eine bestimmte Temperatur repräsentierende Grenzlinie 12 voneinander abgegrenzt. Beispielhaft ist eine derartige Isotherme 12 zwischen den Bereichen 11a und 11b dargestellt. Ein durch die Temperaturzone 11b verkörperter Temperaturbereich kann sich beispielsweise von 35°C bis 30°C erstrecken, wobei entlang der Isothermen 12 dann eine Temperatur von 30°C vorliegt und die Temperaturzone 11a den Temperaturbereich von z.B. 30°C bis 25°C darstellt. Ausserhalb der Zone 11a kann dann eine Temperatur von kleiner 25°C herrschen und wird entsprechend der Erfassungseinstellungen der Wärmebildkamera 2 nicht weiter erfasst. Mittels der im Vermessungsgerät 1 angeordneten Anzieleinrichtung 4 können weiters die Position und die Begrenzung eines Temperaturbereichs von Interesse auf dem Objekt 15 exakt vermessen werden und in einem nächsten Schritt in ein CAD-Modell extrahiert und zusammen mit dem Objekt 15 in ein Koordinatensystem übertragen werden. Hierfür wird ein Messstrahl 30 z.B. entlang der im Bild 10 ermittelten Isothermen 12 geführt und fortlaufend in einer vorbestimmten Punkt-zu-Punkt Auflösung der Abstand zum Objekt 15 bestimmt. Das Führen des Messstrahls 30 kann dabei insbesondere automatisch erfolgen.

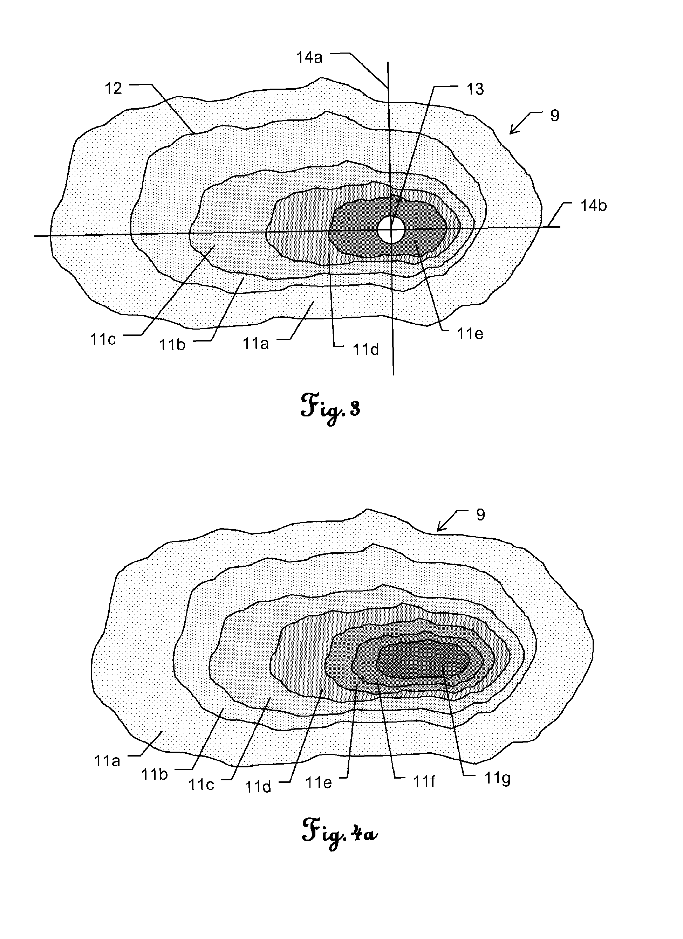

Figur 3 zeigt das Temperaturprofil 9 aus Figur 2, wobei die Einteilung des Temperaturverlaufes in Temperaturbereiche 11a-e bereits ebenfalls mittels Bildbearbeitung erfolgt ist. Die Temperaturen der Temperaturzonen 11a-e nehmen zur Mitte hin zu, d.h. die Zone 11a weist einen Temperaturbereich mit niedrigeren Temperaturen aus, als die Zone 11e, welche den Bereich mit den höchsten Temperaturen repräsentiert. Durch Bildverarbeitung kann weiterhin das Zentrum 13 des Temperaturprofils bestimmt werden und damit z.B. eine Wärme- oder Kältequelle lokalisiert werden. Ebenso können Geraden 14a,14b definiert werden, welche entlang eines Temperaturgradienten verlaufen und durch das Zentrum 13 des Temperaturprofils verlaufen. Dadurch kann z.B. eine Vermessung entlang der Geraden 14a,14b vorgenommen werden und darauf Punkte mit den kleinsten und gleichzeitig Punkte mit den höchsten erfassten Temperaturen lokalisiert werden. Damit können Aussagen über den Temperaturverlauf oder die Ausdehnung eines der mehrerer Temperaturbereiche 11a-e getroffen werden, wobei nicht der gesamte räumlich erfasste Temperaturbereich 11a-e vermessen werden muss, sondern die Vermessung von z.B. zwei senkrecht zueinander stehenden Geraden 14a,14b, welche sich im Zentrum 13 schneiden, ausreichend ist.

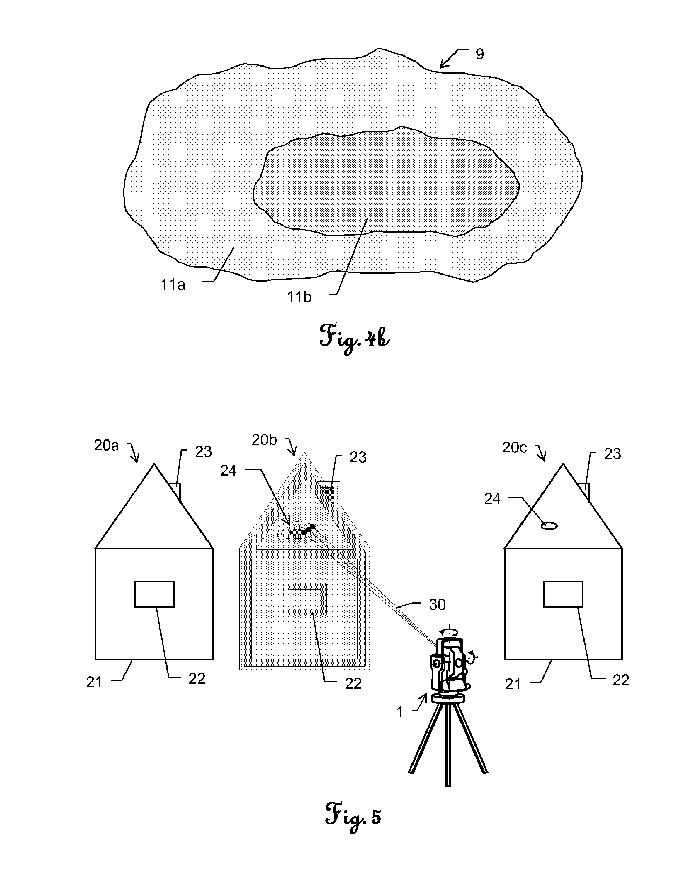

Die Figuren 4a und 4b zeigen jeweils eine beispielhafte Unterteilung eines Temperaturprofils 9 in Temperatur- bzw. Wärmebereiche 11a-g. Dabei wird der gesamte erfasste Temperaturbereich in Figur 4a in sieben Unterbereiche 11a-g unterteilt, wobei der Temperaturbereich in Figur 4b nur in zwei Unterbereiche 11a-b unterteilt wird. Eine derartig unterschiedliche Unterteilung eines Temperaturbereiches kann je nach Anforderung die gewünschte Information ersichtlich machen. Wird z.B. ein Temperaturprofil 9 erfasst, das eine relativ kleine Temperaturdifferenz von z.B. insgesamt 0,5°C umfasst, so kann eine Unterteilung dieses Gesamtprofils in eine Mehrzahl von Unterbereichen eine Unterscheidung und Einordnung von Temperaturbereichen durchführbar machen. Hingegen kann insbesondere bei der Auswertung eines Temperaturprofils, das eine relativ grosse Temperaturspanne von z.B. 100°C Temperaturdifferenz umfasst, dieses in weniger Bereichen abgestuft dargestellt werden, um auch hier eine sinnvolle Unterscheidung von Temperaturzonen vornehmen zu können.

Figur 5 zeigt drei Bilder 20a-c eines Gebäudes und ein erfindungsgemässes Vermessungsgerät 1, mit welchem diese Bilder erfasst werden können. Das erste Bild 20a zeigt eine Tageslichtaufnahme des Gebäudes, wobei diese Aufnahme sowohl mit einer dem Vermessungsgerät 1 zugeordneten Kamera mit einem mit dem menschlichen Auge korrespondierenden spektralen Erfassungsbereich, als auch mit einem vermessungsgerätseitigen spektral erweiterten Wärmesensor, insbesondere mit einer Wärmebildkamera, erfasst werden kann. Auf dem Bild 20a sind die Kanten 21 des Gebäudes, ein Fenster 22 und ein Kamin 23 sichtbar. Im zweiten Bild 20b hingegen sind keine scharfen Kanten 21 des Gebäudes mehr sichtbar, sondern es wird die Temperaturverteilung über die Front des Gebäudes dargestellt. Dieses Bild 20b kann mit einer Wärmebildkamera im infraroten Spektralbereich erfasst worden sein. Deutlich zu erkennen sind die dunkler dargestellten Bereich des Gebäudes, welche im Wesentlichen entlang der Kanten 21 des Gebäudes, um das Fenster 22 und im Bereich des Kamins 23 verlaufen und Bereiche anzeigen, in denen eine stärkere Temperaturabstrahlung vorliegt. Zudem kann in der Wärmebildaufnahme 20b eine Temperaturauffälligkeit 24 sichtbar gemacht werden. Diese Temperaturauffälligkeit 24 kann anzeigen, dass an dieser Stelle z.B. ein Wärmeleck, verursacht beispielsweise durch eine fehlerhafte Gebäudeisolierung, am Gebäude vorliegt. Das Wärmeleck 24 kann auf Basis der Bildinformationen mittels des Vermessungsgeräts 1 vermessen und die Position in Bezug auf das Gebäude exakt bestimmt werden. Hierzu kann ein Messstrahl 30 entlang vorher abgeleiteter Isothermen geführt werden und diese in einer festgelegten Auflösung vermessen. Durch die Extraktion von Isothermen kann ein Kernbereich der Temperaturauffälligkeit 24 bestimmt werden und dieser in ein gemeinsames Koordinatensystem zusammen mit den Gebäudekoordinaten übertragen werden. Anhand eines CAD-Modells kann somit die genaue Position des Lecks 24 relativ zum Gebäude dargestellt werden. Darüber hinaus kann ein weiteres Bild 20c erzeugt werden, welches die aus dem Tageslichtbild 20a sichtbaren Gebäudekonturen zusammen mit dem Wärmeleck 24 zeigt. Durch eine Überlagerung der aus den beiden Bildern 20a und 20b abgeleiteten Informationen lässt sich die Position der Temperaturauffälligkeit 24 exakt darstellen und mittels eines, insbesondere sichtbaren, Laserstrahls durch Führen des Strahls entlang eines Referenzpfades, der der Begrenzung des Kernbereichs des Wärmelecks 24 entspricht, visuell markieren. Eine derartige Markierung kann z.B. für Ausbesserungsarbeiten zur Behebung des Wärmelecks 24 zur Orientierung dienen.

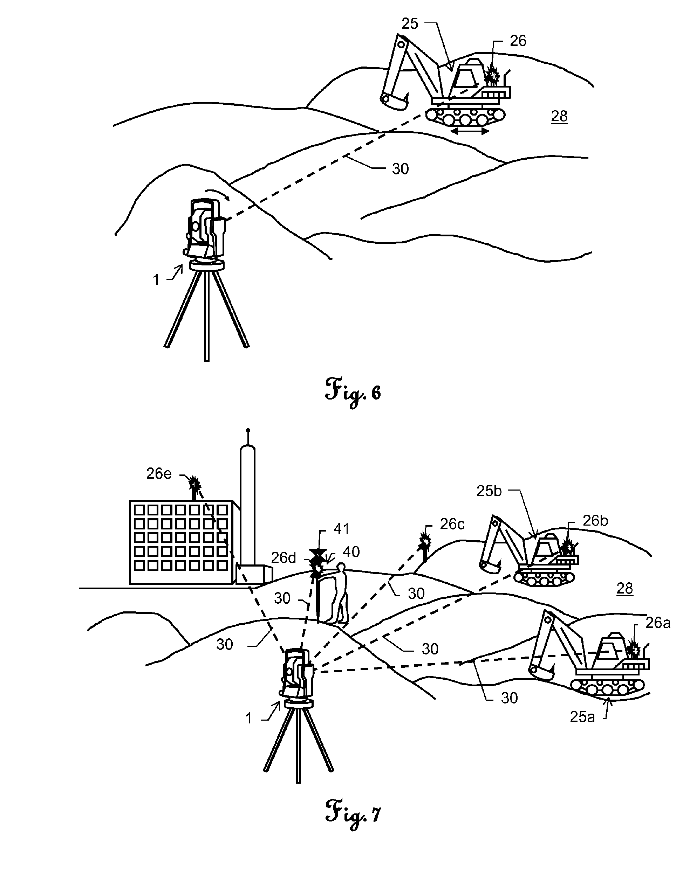

Figur 6 zeigt ein erfindungsgemässes Vermessungsgerät 1 und eine Baumaschine 25 im Gelände 28. Die Baumaschine 25 weist eine Zielmarke 26 auf, welche von dem Vermessungsgerät 1 mittels eines Messstrahls 30 angezielt werden kann. Erfindungsgemäss kann die Zielmarke 26 weiters thermisch kodiert sein, d.h. die Zielmarke 26 kann zumindest teilweise auf eine vordefinierte Temperatur, beispielsweise auf einen definierten Wert zwischen 50°C und 100°C, erwärmt bzw. beispielsweise auf einen definierten Wert zwischen 5°C und 20°C abgekühlt werden, sodass eine dadurch definierte Temperaturstrahlung von der Zielmarke 26 ausgeht. Insbesondere kann die Wahl der Temperatur derart erfolgen, dass eine deutliche Unterscheidung von temperierten Objekten von der Umgebung möglich ist. So kann je nach Aussentemperatur bzw. Umgebungstemperatur eine für die jeweiligen Anforderungen geeignete Temperatur oder Temperaturbereich für die Zielmarke 26 gewählt bzw. vorgegeben werden. Z.B. kann bei einer vorherrschenden Lufttemperatur von 40°C und Sonnenschein ein Temperaturbereich von 100°C bis 110°C für die Zielmarke 26, bei -20°C eine auf 30°C temperierte Zielmarke 26 geeignet sein. Das Vermessungsgerät 1 wiederum verfügt über eine Wärmebildkamera, mit der die Baumaschine 25 und damit gleichzeitig die definiert und bekannt temperierte Zielmarke 26 erfasst werden kann. Mittels Bildverarbeitung kann im Vermessungsgerät 1 die Temperatur der Zielmarke 26 bestimmt und deren Position in Bezug auf die Erfassungsrichtung der Kamera bzw. in Bezug auf die Anzielrichtung der Anzieleinheit abgeleitet werden. Durch die vordefinierte Temperatur der Zielmarke 26 kann die im Wärmebild erfasste Zielmarke 26 am erfindungsgemässen Vermessungsgerät 1 identifiziert und mit der Zuordnung der Zielmarke 26 zu einer Baumaschine 25 die Position der Baumaschine 25 eindeutig bestimmt werden.

Für eine initialisierende Identifikation einer Zielmarke 26 kann eine Initialisierung durch eine Aufnahme der definiert temperierten Zielmarke 26 mit der Wärmebildkamera erfolgen und aus dem aufgenommenen Bild eine Temperatur bzw. ein Temperaturbereich für die Zielmarke 26 abgleitet und abgespeichert werden. Die Temperierung der Zielmarke 26 oder von Teilen dieser kann dabei z.B. mit einem Heizstrahler, der der Zielmarke zugeordnet ist, hergestellt und beibehalten werden. Alternativ dazu kann die Zielmarke 26 auf eine bestimmte vorgegebene Temperatur aufgeheizt werden und mittels Bildverarbeitung auf einem erfassten Wärmebild auf Seiten des Vermessungsgeräts 1 nach einer Temperaturauffälligkeit, die jener vorgegebenen Temperatur entspricht, gesucht werden.

In Figur 7 ist gezeigt wie sich mehrere unterschiedlich temperierte Zielmarken 26a-e gleichzeitig mehreren Objekten zuordnen lassen. Die Marken 26a und 26b sind dabei jeweils einer Baumaschine 25a und 25b zugeordnet. Durch eine fortlaufende Bildanalyse eines an der erfindungsgemässen Vermessungsstation 1 erfassten Wärmebildes und eine anschliessende Bildverarbeitung können die Bewegungen der Zielmarken 26a und 26b und damit die Bewegung der Baumaschinen 25a und 25b im erfassten Bild mitverfolgt werden und basierend darauf eine ausgleichende Ausrichtung der Vermessungsstation 1 in Richtung der Zielmarken 26a und 26b erfolgen. Durch die unterschiedliche thermische Kodierung der Marken 26a und 26b können diese schnell voneinander unterschieden werden und damit die Anzielrichtung des Vermessungsgeräts 1 schnell und genau auf die jeweilige Zielmarke 26a,26b ausgerichtet und eine genaue Bestimmung der Position der Baumaschine 25a,25b durchgeführt werden. Zusätzlich zu den Zielmarken 26a und 26b an den Baumaschinen 25a und 25b sind im Gelände 28 weitere Zielmarken 26c-e positioniert. Dabei sind die beiden Marken 26c und 26e an jeweils einem Messpunkt im Gelände 28 bzw. auf dem gezeigten Gebäude angeordnet. Dadurch dass diese beiden Zielmarken 26c und 26e auf einem erfassten Wärmebild wiederum unterschiedlich erscheinen, lassen sich die korrespondierenden Ziele schnell von den anderen unterscheiden, die Vermessungsstation auf diese ausrichten und deren Position exakt bestimmen. Eine weitere gezeigte Zielmarke 26d ist an einem Vermessungsstab 41, der von einem Benutzer geführt wird, angeordnet. Die definiert temperierte Zielmarke 26d lässt sich wiederum auf Seiten der Vermessungsstation 1 eindeutig über die Verarbeitung eines erfassten Wärmebildes, auf welchem die Zielmarke 26d miterfasst ist, und der darin aufgenommenen Temperaturcharakteristik identifizieren. Auf Basis einer daraus abgeleiteten Richtung zum Ziel und mit der Kenntnis in welchem groben Abstand sich das Ziel befindet und in welchem räumlichen Verhältnis die temperierte Zielmarke 26d zu einem Reflektor 41 an der Vermessungsstange 40 steht, d.h. welchen Abstand die Zielmarke 26d zum Reflektor 41 hat, kann der Reflektor 41 direkt von der Anzieleinheit der Vermessungsstation 1 angezielt werden und damit die genaue Position der Vermessungsstange bestimmt werden. Zusätzlich kann die Position der Vermessungsstange 40 anhand der temperierten Zielmarke 26d mittels Bilderfassung und Bildauswertung fortlaufend bestimmt und die Anzieleinrichtung der Vermessungsstation 1 auf den Reflektor 41, z.B. ein Prisma, ausgerichtet werden. So wird es dem Benutzer dieses erfindungsgemässen Vermessungssystems ermöglicht verschiedene Messpunkte abzuschreiten und die jeweiligen Positionen der Punkte schnell und automatisch zu erfassen.

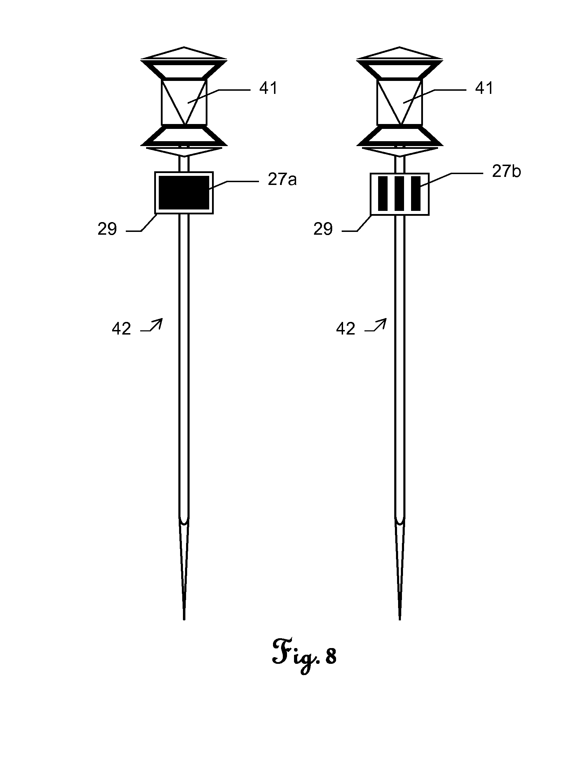

Figur 8 zeigt zwei Vermessungsstäbe 42 mit jeweils einem Reflektor 41, welcher z.B. als Prisma ausgestaltet sein kann. An den Vermessungsstangen 42 ist ferner jeweils ein Kodierelement 29 angeordnet, das sich über einen Teil des Vermessungsstabes 42 erstreckt. Auf den Kodierelementen 29 sind beispielhaft zwei unterschiedliche Formen einer darauf aufgebrachten Kodierung 27a und 27b gezeigt. Die Kodierungsformen 27a und 27b zeigen dabei jeweils dunkle Bereiche auf den Kodierelementen 29, welche definiert temperiert werden können und damit eine definierte thermische Kodierung partiell oder flächig in bestimmten Formen 27a und 27b aufweisen können. Z.B können drei Wärmesteifen 27b oder eine rechteckige Fläche 27a oder andere geometrische Figuren auf den Kodierungselementen 29 vorgesehen sein. Unter Verwendung dieser unterschiedlichen Kodierungsformen 27a und 27b kann z.B. eine Unterscheidung von Zielmarken auf einem Wärmebild mittels Bildverarbeitung erleichtert werden. Eine Identifikation kann dann nicht mehr allein auf Basis unterschiedlicher Temperaturen der Zielmarken erfolgen sondern zusätzlich (oder alternativ) mittels der Erkennung der Form 27a und 27b der temperierten Bereiche. Die in einem aufgenommenen Wärmebild anhand deren definierter Temperatur und/oder Form 27a,27b erkannte Zielmarke kann zusammen mit ihrer Position im Wärmebild unterschiedlich verwendet werden. Zum einen kann eine automatische Zielverfolgung der erkannten Zielmarke erfolgen und dabei fortlaufen die Anzielrichtung der Vermessungsstation 1 auf die Zielmarke ausgerichtet werden. Eine derartige Zielverfolgung basierend auf einem Tageslichtbild ist z.B. in der EP 2 141 450 beschrieben. Die Vermessungsstation wird dabei automatisch auf ein Ziel ausgerichtet und verfolgt dieses, wobei die Zielerkennung mittels Bildverarbeitung eines zuvor erfassten Umgebungsbildes erfolgt. Dieses System unterstützt eine Zielverfolgung und Zielerfassung mittels eines auf einen Reflektor gerichteten und am Vermessungsgerät erfassten Laserstrahls, insbesondere dann wenn der Laserstrahl ausserhalb eines Erfassungsbereichs liegt und eine Zielverfolgung allein auf Grundlage der Erfassung einer Laserreflexion nicht realisierbar ist.

Erfindungsgemäss kann zur Zielverfolgung ein Wärmebild eines Geländes oder einer Umgebung, insbesondere fortlaufend, erfasst, mittels Bildverarbeitung darin eine definiert temperierte Zielmarke identifiziert und durch ein automatisches und fortlaufendes Ausrichten der erfindungsgemässen Vermessungsstation auf die Zielmarke bzw. entsprechend einer Bewegung der Zielmarke im Wärmebild ein Ziel verfolgt werden. Eine solche Zielerkennung und - verfolgung kann insbesondere zur Unterstützung einer automatischen Laser-Zielverfolgungseinheit eingesetzt werden. Durch die zusätzliche Verwendung einer Wärmebildinformation lässt sich so ein anzuzielendes Ziel, z.B. bei einer Unterbrechung der Laserlichtstrecke, schnell erneut erfassen.

Weiterhin kann eine manuelle oder automatische Zielsuche anhand der Temperaturkennung der Zielmarke mittels Bildverarbeitung auf einem erfassten Wärmebild stattfinden. Zusätzlich kann über die Position der im Wärmebild erkannten Zielmarke ein hochpräzises Anzielen eines Ziels automatisch erfolgen. Hierfür wird zunächst mittels Bildverarbeitung anhand einer zur Umgebung unterschiedlichen Temperatur und/oder anhand der geometrischen Form der thermischen Kodierung die Position eines thermischen Kodierelements 29 exakt bestimmt. Für ein darauf basierendes hochpräzises Anzielen z.B. eines Prismas kann der Abstand der thermischen Kodierung zum Reflektor 41 bekannt sein. Mit dieser zusätzlichen Information wird es ermöglicht die Anzieleinheit der Vermessungsstation direkt manuell oder automatisch auf den Reflektor 41 auszurichten und dessen Position exakt zu bestimmen.

## Patentansprüche

1. Verfahren zum mit geodätischer Genauigkeit erfolgenden Positionsbestimmen eines Zielpunkts auf einem Zielobjekt (15) unter Verwendung eines geodätischen Vermessungsgeräts (1) mit
● einer Anzieleinrichtung, insbesondere Ziel-Fernrohr, wobei die Anzieleinrichtung gegenüber einer Basis des Vermessungsgeräts zur Änderung deren Ausrichtung schwenkbar ist und zumindest aufweist
□ eine eine optische Zielachse definierende Objektiveinheit,
□ eine elektronische Distanzmesseinheit und
eine Wärmebildkamera (2) zur Erfassung eines
Wärmebildes (20b) in Richtung der optischen Zielachse,
● einer Winkelmessfunktionalität zur hochpräzisen Erfassung der Ausrichtung der Zielachse, und
● einer Steuerungseinheit zur Steuerung der Winkelmessfunktionalität und der Wärmebildkamera (2), sowie insbesondere der Ausrichtung der Anzieleinheit,
**dadurch gekennzeichnet, dass**
in einem Wärmebildmessmodus durch Auslösen eines Messvorgangs dabei bestimmte Positionsdaten des angezielten Zielpunktes mit einer Temperaturinformation, die aus dem Wärmebild (20b) für den mit der Zielachse anvisierten Zielpunkt ausgelesen wird, verknüpft werden, insbesondere wobei ein mit der Temperaturinformation korreliertes Abspeichern der Positionsdaten des Zielpunktes erfolgt.

2. Verfahren nach Anspruch 1,
**dadurch gekennzeichnet, dass**
ein Zielpunkt auf dem im Wärmebild (20b) erfassten Zielobjekt (15) auf Basis eines vordefinierten Temperatur-Mess-Kriteriums, insbesondere automatisch, georeferenzierend vermessen wird, wobei die optische Zielachse des Vermessungsgeräts (1) auf den Zielpunkt ausgerichtet wird.

3. Verfahren nach Anspruch 2,
**dadurch gekennzeichnet, dass**
zur Definition des Temperatur-Mess-Kriteriums die Temperaturinformation im Wärmebild (20b) in jeweils einen Temperaturbereich (11a-g) repräsentierende Flächen, wobei die Flächen durch Isotherme (12) zueinander abgegrenzt sind, überführt wird und/oder ein Zentrum (13) eines Temperaturbereichs (11a-g), insbesondere ein Flächenschwerpunkt, bestimmt wird.

4. Verfahren nach Anspruch 2 oder 3,
**dadurch gekennzeichnet, dass**
entlang eines eine vorbestimmte Temperaturinformation oder einen definierten Temperaturverlauf repräsentierenden Pfades, insbesondere entlang der Isothermen (12), und/oder fortlaufend zu einem Punkt der vorbestimmten Temperaturinformation, insbesondere zum Zentrum (13) des Temperaturbereichs (11a-g), gemessen wird.

5. Verfahren nach Anspruch 4,
**dadurch gekennzeichnet, dass**
in einer vorbestimmten Punkt-zu-Punkt Auflösung und/oder in einer vorbestimmten zeitlichen Beabstandung von Einzelmessungen automatisch gemessen wird.

6. Verfahren nach einem der Ansprüche 2 bis 5,
**dadurch gekennzeichnet, dass**
ein Referenzstrahl entlang eines Referenzpfades geführt wird, wobei beim Führen des Referenzstrahls mindestens ein Teil des Referenzpfades als Referenzlinie visuell und/oder mittels eines Detektors auf dem Objekt wahrnehmbar ist und der Referenzstrahl auf Basis des Temperatur-Mess-Kriteriums, insbesondere entlang der Isothermen (12), geführt wird.

7. Verfahren nach einem der vorangehenden Ansprüche,
**dadurch gekennzeichnet, dass**
die Temperaturinformation und ein korrespondierendes Tageslichtbild (20a) unabhängig voneinander und/oder zumindest teilweise überlagert auf einer Ausgabeeinheit (3) dargestellt werden,
und/oder erfasste Daten und/oder Information an einen Controller übermittelt werden, wobei die erfassten Daten und/oder die Information, insbesondere die Temperaturinformation, an dem Controller dargestellt werden.

8. Verfahren nach einem der vorangehenden Ansprüche,
**dadurch gekennzeichnet, dass**
Koordinaten zu dem Zielpunkt auf dem Zielobjekt (15) bestimmt und extrahiert werden und die Koordinaten in eine Computereinheit, insbesondere in ein CAD-System, übertragen werden, wobei anhand der Koordinaten Messungen von Abständen und Winkeln in dem erfassten Wärmebild (20b) durchführbar sind.

9. Geodätisches Vermessungsgerät (1), insbesondere Totalstation oder Theodolit, zur Bestimmung von Positionsdaten eines Zielpunktes auf einem Zielobjekt (15) mit
● einer Anzieleinrichtung, insbesondere Ziel-Fernrohr, wobei die Anzieleinrichtung gegenüber einer Basis des Vermessungsgeräts zur Änderung deren Ausrichtung schwenkbar ist und zumindest aufweist
□ eine eine optische Zielachse definierende Objektiveinheit,
□ eine elektronische Distanzmesseinheit und
□ eine Wärmebildkamera (2) zur Erfassung eines Wärmebildes (20b) des Zielobjekts (15) in Richtung der optischen Zielachse,
● einer Winkelmessfunktionalität zur hochpräzisen Erfassung der Ausrichtung der Zielachse, und
● einer Steuerungseinheit zur Steuerung der Winkelmessfunktionalität und der Wärmebildkamera (2), sowie insbesondere der Ausrichtung der Anzieleinheit,
**dadurch gekennzeichnet, dass**
in einem Wärmebildmessmodus durch Auslösen eines Messvorgangs die dabei bestimmten Positionsdaten des angezielten Zielpunktes mit einer Temperaturinformation, die aus dem Wärmebild (20b) für den mit der Zielachse anvisierten Zielpunkt ausgelesen wird, verknüpft werden, insbesondere wobei durch Mittel zum Speichern ein mit der Temperaturinformation korreliertes Abspeichern der Positionsdaten des Zielpunktes erfolgt.

10. Geodätisches Vermessungsgerät (1) nach Anspruch 9,
**dadurch gekennzeichnet, dass**
das Vermessungsgerät (1) eine Steuerungsfunktionalität aufweist, wobei im Rahmen der Steuerungsfunktionalität ein Verfahren zum mit geodätischer Genauigkeit erfolgenden Positionsbestimmen eines Zielpunkts auf einem Zielobjekt (15) nach einem der Ansprüche 1 oder 2, insbesondere automatisch, ausgeführt wird.

11. Geodätisches Vermessungsgerät (1) nach Anspruch 9 oder 10 mit Mitteln zur Bildverarbeitung,
**dadurch gekennzeichnet, dass**
die Steuerungsfunktionalität derart ausgebildet ist, dass bei Ausführung der Steuerungsfunktionalität ein Verfahren nach einem der Ansprüche 3 bis 5, insbesondere automatisch, ausgeführt wird.

12. Geodätisches Vermessungsgerät (1) nach einem der Ansprüche 9 bis 11 mit einer Quelle elektromagnetischer Strahlung, insbesondere einer Laserstrahlquelle, zur Erzeugung eines Referenzstrahls und mit Führungsmitteln zur Führung des Referenzstrahls entlang eines Referenzpfades,
**dadurch gekennzeichnet, dass**
die Steuerungsfunktionalität derart ausgebildet ist, dass bei Ausführung der Steuerungsfunktionalität ein Verfahren nach einem der Ansprüche 6 bis 8, insbesondere automatisch, ausgeführt wird.

13. System aus einem geodätisches Vermessungsgerät (1) nach einem der Ansprüche 9 bis 12 und einer Zielmarke (26),
**dadurch gekennzeichnet, dass**
die Zielmarke (26) eine vorbestimmte thermische Kodierung (27a,27b), insbesondere einen Bereich definierter Temperatur und/oder eine definierte geometrische Anordnung temperierter Bereiche, aufweist, wobei eine Position der Zielmarke (26) auf dem von der Wärmebildkamera (2) erfassten Wärmebild (20b) mittels einer Identifikation der thermischen Kodierung (27a,27b), insbesondere durch Bildverarbeitung, bestimmbar ist.

14. System nach Anspruch 13,
**dadurch gekennzeichnet, dass**
im Rahmen einer Zielverfolgung die Position der Zielmarke (26) auf dem Wärmebild (20b) der Richtung der optischen Zielachse des Vermessungsgeräts (1) zugeordnet wird und die Steuerungseinheit zur Steuerung der Ausrichtung der Anzieleinheit derart ausgebildet ist, dass ein fortlaufendes Ausrichten der optischen Zielachse auf die Zielmarke (26) erfolgt.

15. Zielmarke (26) zur Verwendung mit einem System nach Anspruch 13 oder 14,
**dadurch gekennzeichnet, dass**
die Zielmarke (26) eine Temperiereinheit zur thermischen Kodierung (27a,27b) von zumindest einem Teil der Zielmarke (26) aufweist.
